# EUROPEAN PATENT APPLICATION

(11) **EP 3 156 152 A1**
(43) Date of publication of application: **19.04.2017**
(21) Application number: 15189284.1
(22) Date of filing: 12.10.2015
(51) Int. Cl.: B22F 3/105, B22F 7/06, B28B 1/00, B29C 67/00

(54) **ADAPTION MECHANISM, ADDITIVE MANUFACTURING APPARATUS WITH ADAPTION MECHANISM AND METHOD OF ADDITIVELY MANUFACTURING OF A COMPONENT**

(71) Applicant: Siemens Aktiengesellschaft, 80333 München (DE)
(72) Inventor: Rule, David, 10179 Berlin (DE)

(57) **Abstract**

An adaption mechanism (1) for an additive manufacturing apparatus (10) is presented. The adaption mechanism (1) comprises an adaption means (2) being configured to be reversibly adaptable to a contour (3) of a substrate structure (4) for a manufacture, such that the substrate structure (4) and the adaption means (2) define a manufacturing plane (5). Further, a method of additively manufacturing a component is presented comprising providing the additive manufacturing apparatus (10) for carrying out a manufacture, wherein the additive manufacturing apparatus (10) comprises an adaption mechanism (1) and adapting the contour (3) of the substrate structure (4) by the adaption means (2) of the adaption mechanism (1) such that the substrate structure (4) and the adaption means (2) define a manufacturing plane (5) for the manufacture. The method further comprises additively manufacturing a material for the component onto the substrate structure (4).

## Description

The present invention relates to an adaption mechanism such as a fixture, an additive manufacturing apparatus, such as an apparatus for carrying out a powder bed manufacturing process or powder bed manufacture and a method of additively manufacturing of a component. Said component may be a vane or blade for a turbine, such as a gas or steam turbine. Alternatively, said component may be any other part.

In the manufacture, overhaul and repair of components, such as vanes of gas turbines, additive manufacturing processes play an important role. Particularly, powder bed manufacturing processes, such as SLM (selective laser melting) are important, e.g. in repair applications of turbine parts. In contrast to laser cladding, for example, the SLM-technique stands out for the structural and surface properties of the ready-manufactured components. In this field, there is a demand for versatile apparatuses which allow for a direct, additive or adaptive deposition of material on pre-existing parts or structures.

A powder bed manufacturing process is known from EP 2 415 552 A1, for example.

It is an object of the present invention to provide for an adaption mechanism and for an improved manufacturing apparatus, whereby a resource-saving and versatile component manufacture can be achieved.

This object is achieved by the subject-matter of the independent claims. Advantages embodiments and refinements are subject-matter of the dependent claims.

An aspect of the present invention relates to an adaption mechanism for an additive manufacturing apparatus. The adaption mechanism may be an add-on, an auxiliary tool or adaption aid for the additive manufacturing apparatus. Preferably, the additive manufacturing apparatus is a powder bed manufacturing apparatus, such as an apparatus for selective laser melting. The adaption mechanism comprises an adaption means being configured to be reversibly adaptable to a contour of a substrate structure for the manufacture or for the execution of a corresponding manufacture. Said manufacture or manufacturing process is, preferably, an additive or adaptive manufacturing process. The adaption mechanism is, particularly, configured to be reversibly or removably adaptable to the contour such that the substrate structure and the adaption means define a manufacturing plane for the manufacture. In this regard, for the adaption, the adaption means expediently abuts the contour of the substrate structure.

The substrate structure is, preferably, a pre-existing component or subcomponent, which is to be additively manufactured or to which material is to be deposited. In this regard, the contour or outer contour of the substrate structure, preferably, relates to the specific geometry of the substrate structure. Expressed in other words, the adaption mechanism may be adaptable to lateral side faces of the substrate structure, for example.

The manufacturing plane is, preferably, a characteristic plane e.g. of a manufacturing base for the powder bed manufacturing process, e.g. a surface onto which the powder is arranged and/or processed for the manufacture.

A further aspect of the present invention relates to an additive manufacturing apparatus comprising the adaption mechanism, wherein the additive manufacturing apparatus is configured such that the adaption mechanism can be removed from the additive manufacturing apparatus or deactivated such that a conventional or common manufacturing process is not affected by the adaption mechanism. The common manufacturing process, preferably, relates to the same manufacturing process, however, not applying the adaption mechanism. Said common manufacture may be carried out by a manufacturing apparatus of the prior art. Said removal shall mean that the adaption mechanism or the corresponding parts may be easily mounted off the manufacturing apparatus or adjusted such that the adaption mechanism in no way impairs the (conventional) manufacture.

As an advantage, an adaption mechanism and/or an additive manufacturing apparatus may be provided which is adaptable to the specific geometry of a component, such as the substrate structure, which is to be manufactured or deposited with additional material. In this way, irreversible or persisting modifications, fixations or fixtures which may as well enable the manufacturing apparatus to additively manufacture or repair a (pre-existing) component can, thus, advantageously be dispensed. This is achieved, by the adaption means defining or contributing to the manufacturing plane in a reversible and adaptive way. Particularly, the adaption means allow for the adaption to any pre-defined geometry of a substrate structure, wherein e.g. the manufacturing plane may be adjusted, lifted and/or adapted to a manufacturing surface of the substrate structure. At the same time - by said adaption of the manufacturing plane - the manufacturing process itself may be improved.

In an embodiment the contour of the substrate structure defines a manufacturing surface of the substrate structure. Said manufacturing surface is, preferably, the surface onto which material is to be deposited and/or additively manufactured for a possible manufacture or repair process of e.g. the mentioned component. Expediently the manufacturing surface at least partly forms the manufacturing plane.

In an embodiment the adaption means comprises at least one resilient member, such as a spring, being configured to tend or act against the contour of the substrate structure, when the adaption means is adapted to the contour of the substrate structure. The resilient member may tend against the circumferential side faces of the substrate structure. The at least one resilient member may advantageously allow for an easy and/or reversible adaption of the adaption means to the contour of the substrate structure. The adaption means, preferably, comprises a plurality of resilient members each of which, preferably, being configured in the described way.

In an embodiment, the adaption means is configured such that the adaption means and the substrate structure or the contour form a releasable force closure.

In an embodiment the adaption means comprises a plurality of displaceable parts each of which being configured to at least partly form the manufacturing plane. The displaceable parts may be arranged or born accordingly and in a way known to a person skilled in the art. Preferably, the displaceable parts are even or flat in shape and displaceable in the manufacturing plane. The plurality of said parts may be necessary to adapt to the whole circumferential boundary or contour or almost the whole contour of the substrate structure. According to this embodiment, the displaceable parts may be spring-suspended or comprise or be coupled to the above-mentioned at least one resilient member.

In an embodiment, the adaption means is configured to be adaptable to the contour of the substrate structure over an outline or circumference or all of the lateral side faces of the contour.

In an embodiment the adaption means is configured to fix the contour of the substrate structure. In this way, an additive manufacture of the substrate structure as an already existing subcomponent may be simplified as the adaption means in addition to the achieved adaption also fixes the substrate structure at a location where it is to be coated with further material. Said fixation may for example be achieved by a sufficiently strong spring tensioning, resilience or biasing or by further means known to a skilled person.

In an embodiment the additive manufacturing apparatus is an apparatus for a powder bed manufacturing process or a powder bed manufacturing apparatus.

In an embodiment the adaption mechanism is configured such that, during a manufacture of a component in the additive manufacturing apparatus, a powder for the manufacture is, at least substantially retained, on the manufacturing plane. This, advantageously, enables the powder bed manufacturing process to be executed expediently wherein, at the same time, powder for the manufacturing material may be spared. In a conventional additive manufacture via powder bed processes, such as SLM, a building or buildup space is usually filled with powder up to the manufacturing surface.

In an embodiment the adaption mechanism further comprises a sealing means being configured to seal at least one interspace between the substrate structure and the adaption means when, the adaption means is adapted to the contour of the substrate structure. This embodiment is expediently applied to powder bed manufacturing processes as it enables a powder tight seal. "Powder tight" shall mean that the corresponding powder is retained on the manufacturing plane and does not or not substantially drip or flow in a space below the manufacturing plane.

In an embodiment, the adaption means and/or the sealing means are configured to sustain the temperature exposed to the adaption means and/or the sealing means during a powder bed manufacture.

In an embodiment the adaption mechanism comprises a fixation feature being configured to at least partly fix the substrate structure at a fixation side of the substrate structure. Said fixation side may be remote or face away from the manufacturing surface of the substrate structure.

In an embodiment the fixation feature comprises at least one of the following features: clamps, bolts, nuts, threaded holes and lugs.

In an embodiment the adaption mechanism comprises a base platform comprising the fixation feature, and wherein the adaption mechanism comprises a manufacturing platform comprising the adaption means.

In an embodiment the adaption mechanism is configured such that the manufacturing platform is displaceable with respect to the base platform in a direction corresponding to a main manufacturing direction determined by the additive manufacturing apparatus. Said main manufacturing direction may relate to Z- or vertical or anisotropic direction of or characteristic to the SLM process.

In an embodiment the adaption mechanism is configured such that a distance between the base platform and the manufacturing platform can be varied according to an extension of the substrate structure.

In an embodiment the additive manufacturing apparatus is a selective laser melting (SLM) apparatus. This is a preferred embodiment.

Alternatively, the additive manufacturing apparatus may be an apparatus for selective laser sintering or electron beam melting.

A further aspect of the present invention relates to a method of additively manufacturing a component, such as the above-mentioned component, comprising providing the additive manufacturing apparatus for carrying out the manufacturing process, wherein the apparatus comprises the adaption mechanism as described above. The method further comprises adapting of an contour of the substrate structure by the adaption means of the adaption mechanism such that the substrate structure and the adaption means define a manufacturing plane for the manufacturing process. The method further comprises additively manufacturing a material for the component onto the substrate structure, particularly onto the manufacturing surface of the substrate structure. Said material may be a raw or source material for the component onto or originating from the manufacturing surface of the substrate structure or the component. The method may comprise further process steps such as a heat treatment, e.g. to alloy the component or the corresponding source material or to lower internal stresses or strain in the respective material.

As a further aspect, the present invention relates to a component which has been or can be manufactured by the method as described. The component comprises the substrate structure and the mentioned material.

Expediently, the component comprises properties which are specific and/or characteristic for the described method of additively manufacturing such that the component may be distinguished from components which have been manufactured by other techniques by means of structural and/or elemental analysis. Further, surface properties of the component as described herein may be characteristic for the according method of manufacture and may be probed by surface analysis means known to a skilled person.

Features which are described herein above and below may relate to the adaption mechanism, the additive manufacturing apparatus, the method and/or the described component in the same way.

The present invention is further described hereinafter with reference to illustrated embodiments shown in the accompanying drawings.
- Figure 1: shows an indication of an adaption mechanism and an additive manufacturing apparatus.
- Figure 2: shows a top view of at least parts of the adaption mechanism.
- Figure 3: shows an indication of an adaption mechanism and an additive manufacturing apparatus in an arrangement different from the one of Figure 1.
- Figure 4: shows a top view of a base platform of the adaption mechanism.

Various embodiments are described with reference to the drawings, wherein like reference numerals are used to refer to like elements throughout. In the following description, for the purpose of explanation, numerous specific details are set forth in order to provide a thorough understanding of one or more embodiments. It may be evident that such embodiments may be practiced without these specific details.

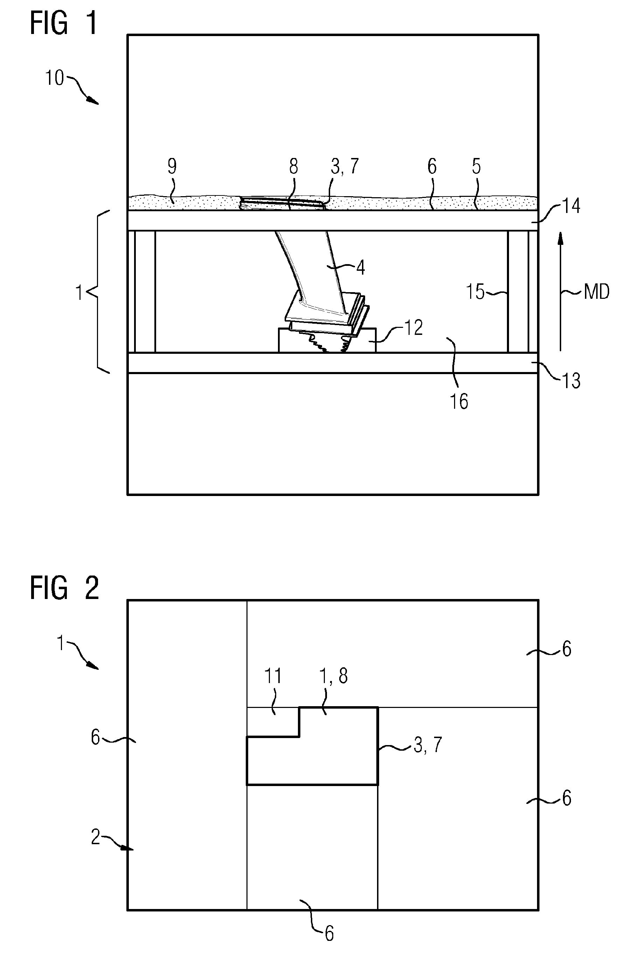

Figure 1 shows a schematic of an additive manufacturing apparatus 10 for and/or during the manufacture of a component, wherein, particularly, an adaption mechanism 1 is indicated in a side view. The additive manufacturing apparatus 10 is, preferably, a powder bed manufacturing apparatus, such as an apparatus for selective laser melting (SLM). Alternatively, the additive manufacturing apparatus 10 may be an apparatus for selective laser sintering or electron beam melting.

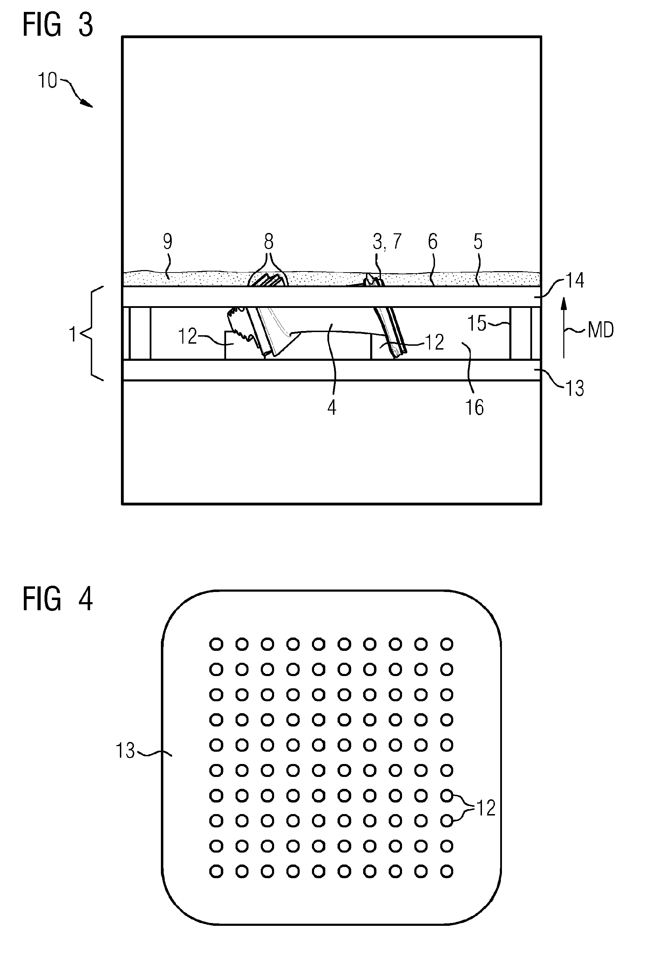

The adaption mechanism 1 comprises a base platform 13. The base platform 13 may exhibit a conventional base of SLM apparatuses. In this regard, the base platform may alternatively be comprised by the conventional SLM apparatus and not by the adaption mechanism 1 as described herein. The base platform 13 (cf. also Figure 4 below) comprises a fixation feature 12 (see below).

The adaption mechanism 1 further comprises a manufacturing platform 14. The manufacturing platform 14 is, preferably, arranged remote from the base platform 13 along a manufacturing direction MD.

The manufacturing platform 14 comprises an adaption means 2. The adaption means 2 is configured to be reversibly adaptable to a contour 3 of a substrate structure 4 for an additive manufacture such that the substrate structure 4 and the adaption means 2 define a manufacturing plane 5 for the corresponding manufacturing process. The depicted substrate structure 4 is, preferably, a predefined component or subcomponent, such as a component for a turbine. The substrate structure may in this regard be or comprise a blade or running vane of a gas turbine or a part thereof.

The substrate structure 4 is preferably fixed at a fixation side (not explicitly indicated) by the fixation feature 12, such as clamped.

The manufacturing plane 5 exhibits the plane on which a powder 9 for the SLM process is disposed or processed for the manufacture of the component. Compared to a conventional SLM process, with the given embodiment, the manufacturing plane 5 may advantageously be lifted towards a manufacturing surface 8 of the substrate structure 4 in order to additively manufacture the component onto or originating from the manufacturing surface 8 of the substrate structure 4.

The contour 3 may relate to side faces (not explicitly indicated) or a circumference 7 of the substrate structure 4. Due to the mentioned adaption, the manufacturing plane 5 may be displaced as compared to a conventional SLM process, for example. Thereby, it may be achieved that the powder 9 is at least substantially retained on the manufacturing plane 5 and does not drip into a space 16.

The adaption means 2 may additionally fix or support the contour 3 of the substrate structure 4 in order to ease the manufacturing process.

The additive manufacturing apparatus 10 is, preferably, configured such that the adaption mechanism 1 can be removed or easily mounted off the additive manufacturing apparatus 10 such that e.g. a conventional SLM process can be carried out by the additive manufacturing apparatus 10 which is not affected or impaired by the described adaption mechanism 1. This is for example desired as the additive manufacturing apparatus 10 may still be needed to be used for a bottom-up manufacture of a component, i.e. a manufacture without a pre-existing part or a substrate structure.

As shown in Figure 1, the adaption mechanism 1 further comprises a height adjustment 15 in order to adjust or adapt e.g. the manufacturing plane 5 to the manufacturing surface 8 of the substrate structure 4. In this way, the described adaption mechanism 1 may be capable of adapting to said contour or outer contour 3 as well as to the height, level or extension of the substrate structure 4.

The adaption mechanism may be or related to a fixture mechanism.

In order to adapt to the contour 3, the adaption means 2 may comprise at least one, preferably a plurality of, resilient member(s) (not explicitly shown in the Figures).

This situation is indicated in Figure 2 showing a schematic top view of the adaption mechanism 1 by means of which the substrate structure 4 or the contour 3 thereof is adapted to or fixed, e.g. for a subsequent additive manufacture or the deposition of material onto the manufacturing surface 1 by means of SLM.

It is particularly shown that the adaption mechanism 1 comprises at least one, in the example four displaceable parts 6. The displaceable parts 6 are configured to tend against the contour 3 of the substrate structure 4. This may be achieved by means of the mentioned at least one resilient member. The displaceable parts 6 are, preferably, flat and/or even in shape and may be coupled to each other. Each of the displaceable parts 6 is, preferably, configured to at least partly from the manufacturing plane 5.

The manufacturing plane 5 may be formed and/or defined by further elements apart from the substrate structure 4 and the displaceable parts 6. Further, each of the displaceable parts 6 is, preferably, configured to surround the contour 3 and/or the circumference 7 of the substrate structure 4. It is shown that an interspace (not explicitly indicated) at a corner of the substrate structure 4 remains free such that the powder 9 may reach the space 16 (cf. Figures 1 and 3). This may be the case as the contour 3 and therewith the manufacturing surface 8 of the substrate structure 4 may be shaped such that the adaption means 2 may not completely adapt or catch every feature of the substrate structure 4 or the manufacturing surface 8.

Thus, to prevent the powder 9 from reaching the space 16, the adaption mechanism 1 further comprises a sealing means 11 being configured to seal said interspace between the substrate structure 4 and the adaption means 2.

The adaption means 2 and/or the sealing means 11 are expediently configured to sustain the applied temperatures load during the manufacture of the component, particularly during exposure of the powder 9 by a laser beam of an SLM apparatus 10. Said temperatures may relate to temperatures up to 200° C or higher. To this effect, the sealing means 11 may be or comprise a viscous conduction paste or similar means being sufficiently shape-adaptive to seal the at least one interspace.

Figure 3 shows, as compared to Figure 1, an alternative arrangement of the substrate structure 4 in the adaption mechanism 1 and/or the additive manufacturing apparatus 10. It is particularly shown that the substrate structure 4 is fixed to the base platform 13 at two positions. Accordingly, the adaption mechanism 1 or the described fixation feature 12 may fix the substrate structure 4 at a fixation side (lower side face) of the substrate structure 4.

In Figure 1, the substrate structure 4 is fixed once, and in Figure 2, the substrate structure 4 is fixed twice by the fixation feature of the base platform 13.

Due to the different arrangement, a different state or adjustment of the height adjustment 15 (cf. above) of the manufacturing platform 14 as compared to Figure 1 is necessary. However, the general adaption process as described by means of e.g. the adaption means 2 is performed in the same way.

Figure 4 shows a top view of the base platform 13. The base platform 13 comprises a fixation feature 12 being configured to at least partly fix the substrate structure 4 at the fixation side of the substrate structure 4. The fixation feature 12 may comprise at least one of the following features: clamps, bolts, nuts, threaded holes and lugs, although only holes are indicated in Figure 4. Accordingly, the fixation feature may constitute fixation means comprising the described features and also the fixation feature 12 or clamp as described in Figures 1 and 3.

According to a method of additively manufacturing of a component as described herein, the described additive manufacturing apparatus 10 may be provided for carrying out the described powder bed manufacturing process. Then, the substrate structure 4 may be mounted, fixed or adapted to the additive manufacturing apparatus 10 via said adaption mechanism 1. Said mounting may comprise the fixation and/or the adaption of the contour 3 of substrate structure 4. The method further comprises additively, i.e. on top of or originating from the substrate structure 4, manufacturing a material for the component onto the manufacturing surface 8 of the substrate structure 4.

The reference numeral 4 as used herein may as well denote the ready-manufactured component as the figures, particularly Figures 1 and 3 at least partly indicate the process by which the component is manufactured.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. Adaption mechanism (1) for an additive manufacturing apparatus (10), the adaption mechanism (1) comprising an adaption means (2) being configured to be reversibly adaptable to a contour (3) of a substrate structure (4) for a manufacture, such that the substrate structure (4) and the adaption means (2) define a manufacturing plane (5) for the manufacture.

2. Adaption mechanism (1) according to claim 1, wherein the adaption means (2) comprises at least one resilient member being configured to tend against the contour (3) of the substrate structure (4).

3. Adaption mechanism (1) according to claim 1 or 2, wherein the adaption means (2) comprises a plurality of displaceable parts (6) each of which being configured to at least partly form the manufacturing plane (5).

4. Adaption mechanism (1) according to at least one of the previous claims, wherein the contour (3) of the substrate structure (4) defines a manufacturing surface (8) of the substrate structure (4).

5. Adaption mechanism (1) according to at least one of the previous claims, wherein the adaption means (2) is configured to fix the contour (3) of the substrate structure (4).

6. Adaption mechanism (1) according to at least one of the previous claims, wherein the additive manufacturing apparatus (10) is a powder bed manufacturing apparatus and the adaption mechanism (1) is configured such that, during a manufacture of a component in the additive manufacturing apparatus, a powder (9) for the manufacture is retained on the manufacturing plane (5).

7. Adaption mechanism (1) according to at least one of the previous claims, wherein the adaption mechanism (1) further comprises a sealing means (11) being configured to seal an interspace between the substrate structure (4) and the adaption means (2) when the adaption means (2) is adapted to the contour (3) of the substrate structure (4).

8. Adaption mechanism (1) according to at least one of the previous claims, comprising a fixation feature (12) being configured to at least partly fix the substrate structure (4) at a fixation side of the substrate structure (4).

9. Adaption mechanism (1) according to claim 8, wherein the fixation feature (12) comprises at least one of the following features: clamps, bolts, nuts, threaded holes, lugs.

10. Adaption mechanism (1) according to claim 8 or 9, wherein the adaption mechanism (1) comprises a base platform (13) comprising the fixation feature (12), and wherein the adaption mechanism (1) comprises a manufacturing platform (14) comprising the adaption means (2).

11. Adaption mechanism (1) according to claim 10, wherein the adaption mechanism (1) is configured such that the manufacturing platform (14) is displaceable with respect to the base platform (13) in a direction corresponding to a main manufacturing direction (MD) determined by the additive manufacturing apparatus (10).

12. Adaption mechanism (1) according to at least one of the previous claims, wherein the additive manufacturing apparatus (10) is a selective laser melting apparatus.

13. Additive manufacturing apparatus (10) comprising the adaption mechanism (1) according to at least one of the previous claims, wherein the additive manufacturing apparatus (10) is configured such that the adaption mechanism (1) can be removed from the additive manufacturing apparatus (10).

14. Method of additively manufacturing a component comprising the steps of:
- providing a additive manufacturing apparatus (10) for carrying out a manufacture, wherein the additive manufacturing apparatus (10) comprises an adaption mechanism (1),
- adapting a contour (3) of a substrate structure (4) by an adaption means (2) of the adaption mechanism (1) such that the substrate structure (4) and the adaption means (2) define a manufacturing plane (5) for the manufacture and
- additively manufacturing a material for the component onto the substrate structure (4).

15. Component being manufactured by the method according to claim 14.
